# EUROPEAN PATENT SPECIFICATION

(11) **EP 0 996 562 B1**
(45) Date of publication and mention of the grant of the patent: **19.12.2001**
(21) Application number: 98935387.5
(22) Date of filing: 10.07.1998
(51) Int. Cl.: B61D 45/00, B60P 7/13

(54) **Support device for a container on a railway wagon**
Stützvorrichtung für einen Container auf einem Eisenbahnwagen
Dispositif de support d'un conteneur sur un wagon

(30) Priority: 10.07.1997 NL 1006536
(43) Date of publication of application: 03.05.2000
(73) Proprietor: De Ark Groep B.V., NL-8250 AB Dronten (NL)
(72) Inventor: VAN DEN POL, Aart, Antonie, NL-3862 AG Nijkerk (NL)
(74) Representative: Jorritsma, Ruurd
(86) International application number: NL9800401
(87) International publication number: WO9902386

(56) References cited:
- EP-A- 0 516 584
- AU-A- 4 439 372
- CH-A- 362 981
- DE-U- 1 996 932

## Description

The invention relates to a support device for a container, comprising support surface, for example of a railway wagon for supporting and looking said container, which support surface has a frame that can be rotated about an essentially vertical axis with respect to the support surface, such that the container can be slid onto and off the frame when the frame is in the rotated position, and end stops to restrain the container when the frame is in the position in which it has been rotated above the support surface.

A support device of this type is disclosed in EP-A 431 690 or also in EP-A-0 516 584. Prevention of horizontal movement of the container is effected by means of end stops rigidly mounted on the support surface.

A support device intended to prevent upward movement of the container, from the frame, is also present.

The fixed end stops on the support surface form a boundary past which it must be possible to rotate the container without restraint. This means that the length of the container must remain restricted in comparison with the length of the support surface. It also means that the shape of the container cannot be freely chosen: in the partially rotated position the corners of a standard container (ISO container) would project a relatively long way and collide with the end stops. A further disadvantage is that a separate lock is needed for locking in the vertical direction.

The aim of the invention is to provide a support device which does not have these limitations. Said aim is achieved by means of the combination of features forming the characterizing part of Claim 1 in that one of the end stops is movable between a release position, in which the frame with container can be rotated past said end stop, and a locking position in which the container is prevented from shifting.

In the release position it is always possible to rotate the container, irrespective of its shape or type. When folded away, the end stop then forms no impediment

The movable end stop can be constructed in various ways. An embodiment in which the movable end stop has a stable triangular shape in the locked position, such that a first triangle element runs obliquely downwards from the frame to a hinge point on the support surface, is preferred.

The sloping triangle element is a thrust element that provides reliable locking. Furthermore, the movable end stop can have a second triangle element that is rotatably connected to the support surface in a position between the frame and the connection of the first triangle element to the support surface.

The two triangle elements together with the support surface form a stable triangle which forms a very reliable lock.

The first triangle element can consist of two element halves hingeably connected to one another, all hinge pins running parallel to one another transversely to the support surface, such that the second triangle element can be folded flat onto the support surface when the element halves of the first triangle element are hinged towards one another.

The two element halves and the second triangle element form, as it were, a linkage that is movable from the triangular shape into the folded away position.

To increase the stability, in the locked position the element halves can be bent slightly beyond the straight position in the direction of the support surface and supported in that direction by stabilising means on the support surface.

The stabilising means can comprise a rotary eccentric that on rotation causes the element halves to flip in the opposite direction away from the support surface. The eccentric can also be joined to securing means, which securing means are rotatable with the eccentric and, when the element halves are in the stable position, secure said halves against turning away from the direction of the support surface.

The triangle elements are plate-shaped. Furthermore, the end stop can be placed against a counter-element on the container, which is provided as standard.

The invention will be explained in more detail below with reference to an illustrative embodiment shown in the figures.

Figure 1 shows the locking device according to the invention, on a wagon with a container.

Figure 2 shows a perspective view of the locking device according to the invention in the locked position.

Figure 3 shows an enlarged detail of Figure 1.

Figure 4 shows rotation of the locking device out of the locked position.

Figure 5 shows the release position of the locking device.

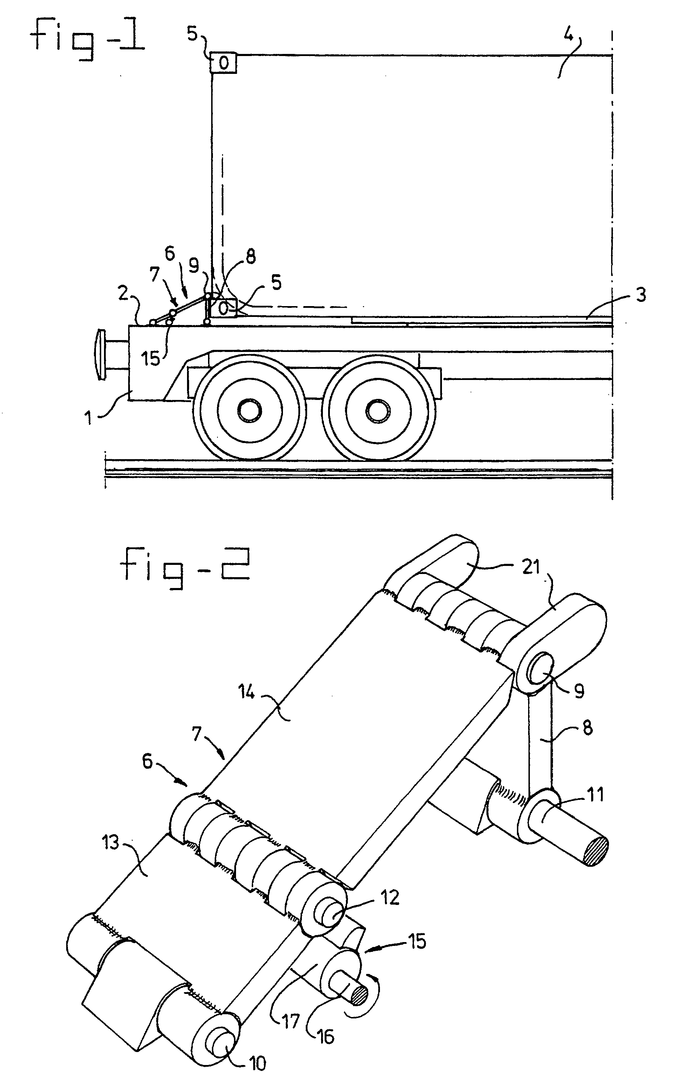

The wagon 1 shown in Figure 1 has a support surface 2 on which a rotatable frame 3 is located. Said frame 3 is mounted, approximately in the middle, by means of a pivot ring (not shown) with an essentially vertical axis on the wagon 1. A container 4, which is also designated an "ISO container" and at each of the eight corners has a comer piece 5 that can be gripped by container hoists known per se, is located on the frame 3.

At both ends of the support surface 2 there is a locking device 6 according to the invention, which in the locked position has a stable triangular shape. The locking device comprises a first triangle element 7 and a second triangle element 8. Said triangle elements 7, 8 are connected to one another by means of hinge 9; in addition, triangle element 7 is connected to the support surface 3 by hinge 10 and triangle element 8 is connected to support surface 3 by means of hinge 11. The locking device 6 is in contact with a nose 20 on the container 4.

The first triangle element 7 consists of two element halves 13, 14, which are hingeably connected to one another by means of hinge 12 and which in the locked position lie virtually in the extension of one another.

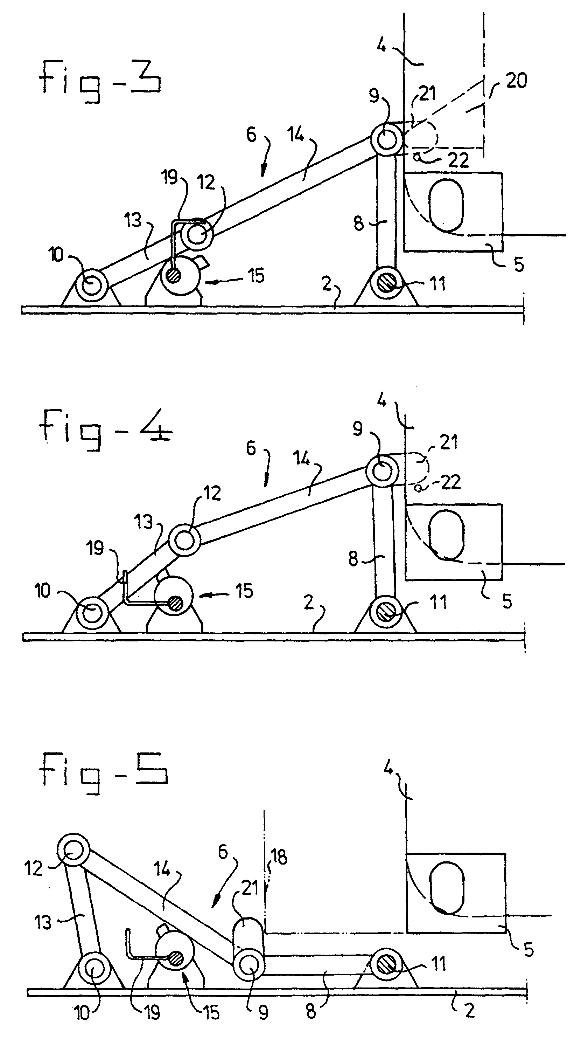

As shown in Figure 3, they are supported in said locked position by means of the stabilising means indicated in their entirety by 15. Said stabilising means consist of an operating shaft 16, on which an eccentric 17 is located.

In the stable position shown in Figure 3, element half 13 bears on the stabilising means 15; in this position the element halves 13, 14 are bent slightly beyond the straight position in the direction of the support surface 2, such that locking is still assured even when compressive forces are exerted in the first triangle element 6. Furthermore, triangle elements 8 have fingers 21, which are hooked over the nose 20 on the container, such that upward movement thereof is prevented.

On rotating the stabilising means 15, the element half 13 is lifted, such that the locked position is no longer stable and is transformed into the release position according to Figure 5. This also provides an indication as to whether or not the container is locked. In this position the container 4 can be rotated, the position 18 indicated by broken lines constituting the outermost position that the comer piece 5 of the container can reach in the rotated position.

It can be seen from this that the container 4 can be rotated past the locking device 6 when the latter is in its release position.

Two securing hooks 19 are mounted on the rotary shaft 16, which securing hooks 19, in the locked position in Figure 3, engage around the hinge pin 12. By this means the locking device is secured against unintentional transition to the release position.

## Claims

1. Support device for a container, comprising a support surface (2), for example of a railway wagon (1), for supporting and locking said container (4), which support surface (2) has a frame (3) that can be rotated about an essentially vertical axis with respect to the support surface (2), such that the container (4) can be slid onto and off the frame (3) when the frame (3) is in the rotated position, and end stops (6) to restrain the container (4) when the frame (3) is in the position in which it has been rotated above the support surface (2), which end stops are situated on the support surface (2) at both ends thereof beyond the frame (3), **characterised in that** one of the end stops (6) is movable between a release position, in which the frame (3) with container can be rotated past said end stop (6), and a locking position in which the container (4) is prevented from shifting in the longitudinal direction of the frame (3).

2. Support device according to Claim 1, wherein the movable end stop (6) has a stable triangular shape in the locked position, wherein a first triangle element (7) runs obliquely downwards from the frame (3) to a hinge point (10) on the support surface (2).

3. Support device according to Claim 2, wherein the movable end stop (6) has a second triangle element (8) that is rotatably (11) connected to the support surface (2) in a position between the frame (3) and the connection (10) of the first triangle element (7) to the support surface (2).

4. Support device according to Claim 3, wherein the first triangle element (7) consists of two element halves (13, 14) hingeably (12) connected to one another, and all hinge pins (9-12) run parallel to one another transversely to the support surface (2), such that the second triangle element (8) can be folded flat onto the support surface (2) when the element halves (13, 14) of the first triangle element (7) are hinged towards one another.

5. Support device according to Claim 4, wherein in the locked position the element halves (13, 14) are bent slightly beyond the straight position in the direction of the support surface (2) and are supported in that direction by stabilising means (15) on the support surface (2).

6. Support device according to Claim 5, wherein the stabilising means (15) comprise a rotary eccentric (17) that on rotation causes the element halves (13,14) to flip in the opposite direction away from the support surface (2).

7. Support device according to Claim 6, wherein the eccentric (17) is joined to securing means (19), which securing means (19) are rotatable with the eccentric (17) and, when the element halves (13, 14) are in the stable position, secure said halves against turning away from the direction of the support surface (2).

8. Support device according to one of Claims 2-7, wherein the triangle elements (7, 8) are plate-shaped.

9. Support device according to one of the preceding claims, wherein the end stop can be placed against a counter-element (20).

10. Support device according to one of the preceding claims, wherein the end stop has at least one finger (21) which in the locked position hooks over a nose (22) on the container to prevent upward movement thereof.

## Patentansprüche

1. Stützvorrichtung für einen Container, mit einer Stützfläche (2), z. B. eines Eisenbahnwagens (1), zum Stützen und Verriegeln besagten Containers (4), wobei die Stützfläche (2) einen Rahmen (3), der um eine im wesentlichen vertikale Achse in Bezug auf die Stützfläche (2) drehbar ist, so daß der Container (4) auf den Rahmen (3) und davon heruntergeschoben werden kann, wenn der Rahmen (3) sich in der gedrehten Position befindet, und Endanschläge (6) aufweist, um den Behälter (4) festzuhalten, wenn der Rahmen (3) sich in der Position befindet, in der er über der Stützfläche (2) gedreht worden ist, wobei die Endanschläge auf der Stützfläche (2) an deren beiden Enden über dem Rahmen (3) angeordnet sind, **dadurch gekennzeichnet, daß** einer der Endanschläge (6) zwischen einer Frcigabeposition, in der der Rahmen (3) mit Container an besagtem Endanschlag (6) vorbei drehbar ist, und einer Verriegelungsposition beweglich ist, in der der Container (4) an einem Verschieben in der Längsrichtung des Rahmens (3) gehindert wird.

2. Stützvorrichtung nach Anspruch 1, **dadurch gekennzeichnet, daß** der bewegliche Endanschlag (6) eine stabile dreieckige Gestalt in der verriegelten Position aufweist, wobei ein erstes dreieckiges Element (7) von dem Rahmen (3) zu einem Gelenkpunkt (10) auf der Stützfläche (2) schräg nach unten verläuft.

3. Stützvorrichtung nach Anspruch 2, **dadurch gekennzeichnet, daß** der bewegliche Endanschlag (6) ein zweites dreieckiges Element (8) aufweist, das mit der Stützfläche (2) in einer Position zwischen dem Rahmen (3) und der Verbindung (10) des ersten dreieckigen Elements (7) mit der Stützfläche (2) drehbar (11) verbunden ist.

4. Stützvorrichtung nach Anspruch 3, **dadurch gekennzeichnet, daß** das erste dreieckige Element (7) aus zwei Elementhälften (13, 14) besteht, die drehbar (12) miteinander verbunden sind, und alle Drehstifte (9 - 12) parallel zueinander quer zur Stützfläche (2) verlaufen, so daß das zweite dreieckige Element (8) flach auf die Stützfläche (2) geklappt werden kann, wenn die Elementhälften (13, 14) des ersten dreieckigen Elements (7) aufeinander zu gedreht werden.

5. Stützvorrichtung nach Anspruch 4, **dadurch gekennzeichnet, daß** die Elementhälften (13, 14) in der verriegelten Position etwas über die geradlinige Position in die Richtung der Stützfläche (2) gebogen sind und in der Richtung von Stabilisiermitteln (15) auf der Stützfläche (2) gestützt werden.

6. Stützvorrichtung nach Anspruch 5, **dadurch gekennzeichnet, daß** die Stabilisiermittel (15) einen Drehexzenter (17) umfassen, der bei Drehung verursacht, daß die Elementhälften (13, 14) in der entgegengesetzten Richtung von der Stützfläche (2) weg umklappen.

7. Stützvorrichtung nach Anspruch 6, **dadurch gekennzeichnet, daß** der Exzenter (17) mit Sicherungsmitteln (19) verbunden ist, wobei die Sicherungsmittel (19) mit dem Exzenter (17) drehbar sind und, wenn die Elementhälften (13, 14) sich in der stabilen Position befinden, die Hälften gegen ein Wegdrehen von der Richtung der Stützfläche (2) sichern.

8. Stützvorrichtung nach einem der Ansprüche 2 - 7, **dadurch gekennzeichnet, daß** die dreieckigen Elemente (7, 8) plattenförmig sind.

9. Stützvorrichtung nach irgendeinem der vorangehenden Ansprüche, **dadurch gekennzeichnet, daß** der Endanschlag gegen ein Gegenelement (20) plazierbar ist.

10. Stützvorrichtung nach irgendeinem der vorangehenden Ansprüche, **dadurch gekennzeichnet, daß** der Endanschlag wenigstens einen Finger (21) aufweist, der in der verriegelten Position über eine Nase (22) an dem Container einhakt, um eine Aufwärtsbewegung desselben zu verhindern.

## Revendications

1. Dispositif de support pour un conteneur, comprenant une surface de support (2), par exemple un wagon de chemin de fer (1) servant à supporter et verrouiller ledit conteneur (4), laquelle surface de support (2) possède un châssis (3), qui peut tourner autour d'un axe sensiblement vertical par rapport à la surface de support (2), de telle sorte qu'on peut faire monter le conteneur (4) sur le châssis (3) et l'en faire descendre, par glissement, lorsque le châssis (3) est dans la position pivotée, et des butées d'extrémité (6) pour retenir le conteneur (4) lorsque le châssis (3) est dans la position dans laquelle il est amené par pivotement au-dessus de la surface de support (2), les butées d'extrémité étant situées sur la surface de support (2) au niveau des deux extrémités de cette dernière au-delà du châssis (3), **caractérisé en ce que** l'une des butées d'extrémité (6) est déplaçable entre une position de libération, dans laquelle le châssis (3) équipé du conteneur peut être amené par pivotement au-delà de ladite butée d'extrémité (6), et une position de verrouillage, dans laquelle le conteneur (4) ne peut pas basculer dans la direction longitudinale du châssis (3).

2. Dispositif de support selon la revendication 1, dans lequel la butée de l'extrémité mobile (6) possède une forme triangulaire stable dans la position verrouillée, et dans lequel un premier élément triangulaire (7) s'étend obliquement vers le bas à partir du châssis (3) jusqu'à un point d'articulation (10) sur la surface de support (2).

3. Dispositif de support selon la revendication 2, dans lequel la butée d'extrémité mobile (6) possède un second élément triangulaire (8) qui est raccordé de manière à pouvoir tourner (11) à la surface de support (2) pour venir dans une position entre le châssis (3) et le point (10) de raccordement du premier élément triangulaire (7) à la surface de support (2).

4. Dispositif de support selon la revendication 3, dans lequel le premier élément triangulaire (7) est constitué de deux moitiés d'éléments (13,14) reliées entre elles d'une manière articulée (12) et que tous les axes d'articulation (9-12) sont parallèles entre eux transversalement par rapporc à la surface de support (2) de telle sorte que le second élément triangulaire (8) peut être replié à plat sur la surface de support (2) lorsque les moitiés (13,14) du premier élément triangulaire (7) sont rabattues l'une vers l'autre.

5. Dispositif de support selon la revendication 4, dans lequel dans la position verrouillée les moitiés (13,14) de l'élément sont légèrement coudées au-delà de la partie rectiligne en direction de la surface de support (2) et sont supportées dans cette direction par des moyens de stabilisation (15) sur la surface de support (2).

6. Dispositif de support selon la revendication 5, dans lequel les moyens de stabilisation comprennent un excentrique rotatif (17) qui, lors de sa rotation, amène les moitiés (13,14) de l'élément à basculer dans la direction opposée en s'écartant de la surface de support (2).

7. Dispositif de support selon la revendication 6, dans lequel l'excentrique (17) est réuni à des moyens de fixation (19), lesquels moyens de fixation (19) peuvent tourner avec l'excentrique (17) et, lorsque les moitiés (13,14) de l'élément sont dans la position stable, bloquer lesdites moitiés contre toute rotation dans la direction s'écartant de la surface de support (2).

8. Dispositif de support selon l'une des revendications 2 à 7, dans lequel les éléments en forme de triangles (7,8) sont agencés en forme de plaques.

9. Dispositif de support selon l'une des revendications précédentes, dans lequel la butée d'extrémité peut être placée contre un contre-élément (20).

10. Dispositif de support selon l'une des revendications précédentes, dans lequel la butée d'extrémité possède au moins un doigt (21), qui, dans la position verrouillée, s'accroche sur un nez (22) situé sur le conteneur de manière à empêcher un déplacement ascendant de ce dernier.
